# EUROPEAN PATENT SPECIFICATION

(11) **EP 0 587 332 B1**
(45) Date of publication and mention of the grant of the patent: **26.03.1997**
(21) Application number: 93306580.7
(22) Date of filing: 19.08.1993
(51) Int. Cl.: C08K 3/00, C08L 33/06, C09D 5/34, C09K 3/10

(54) **Acrylic caulking or sealing composition**
Acrylische Dichtungsmasse
Composition acrylique pour sceller ou calfater

(30) Priority: 11.09.1992 US 943948
(43) Date of publication of application: 16.03.1994
(73) Proprietor: ROHM AND HAAS COMPANY, Philadelphia Pennsylvania 19105 (US)
(72) Inventor: Tanzer, Joseph David, Washington, Pennsylvania 19034 (US)
(74) Representative: Tanner, James Percival

(56) References cited:
- EP-A- 0 220 841
- WO-A-92/20722
- US-A- 4 571 415

## Description

The present invention relates to an acrylic composition, particularly useful as a sealing or caulking composition. In particular the present invention relates to a method of forming an acrylic caulking or sealing composition with improved adhesion, the silane-free composition containing an acrylic emulsion copolymer binder with a glass transition temperature from about 0 °C. to about -60 °C., wherein the method includes admixing with the binder zinc oxide in an amount of from about 0.5% to about 5%, by dry weight based on dry copolymer binder weight, and solid silica in an amount of from about 0.5% to about 10%, by dry weight based on dry copolymer binder weight.

Caulk and sealant compositions are used in many applications of construction materials, particularly to seal and protect gaps, joints, and other openings in architectural materials or between similar or dissimilar architectural materials. They are used in both interior and exterior applications and are exposed to the effects of temperature variations, sunlight, and moisture. One of the key properties affecting the performance of caulking compositions and the maintenance of that performance over an extended period of time is the adhesion of the caulking or sealant composition to the architectural construction material(s) to which it has been applied. Adhesion to glass, ceramic tile, and aluminum under wet conditions has been particuarly hard to achieve.

US-A-4,576,864 discloses a water spreading plastic material which consists of a plastic base having a water-repellent surface and coated thereon (1) an adhesive and (2) a water spreading layer. The adhesive contains a non-water-soluble, organic solvent soluble and essentially non-swellable polymer which contains a polar group. The water-spreading layer is adhered onto the base by the adhesive, and is composed of colloid particles selected from the group consisting of silicon oxide, a metallic oxide, and mixtures thereof. Further disclosed is the increased adherence of the binding agent-free layer of the silicon and/or metalic oxide to the surface of a water-repellent plastic.

US-A-4,626,567 discloses an acrylic copolymer latex sealant composition which contains an acrylic copolymer having a glass transition temperature not exceeding about 0 °C. and at least about 0.5% by weight silica. EP-A-0 258 988 discloses permanently flexible and non-tacky coating, mastic, and caulking compositions which contain one or more polymers having a Tg of about -50 °C. to about -10 °C. and certain pendant functional groups. Highly reflective opaque pigments such as zinc oxide, for example, are disclosed to produce mastics and caulks which are opaque, especially to ultraviolet light, and are typically used at concentrations of about 5 to about 75 weight percent of total solids. Other fillers and extenders disclosed include silica. EP-A-0 327 376 discloses copolymers of vinyl esters and silicon monomers with a glass transition temperature in the range of -20 °C. to +40 °C. which are suitable as binders for emulsion paints, which paints may also contain inorganic fillers such as silica. EP-A-0 373 866 discloses certain copolymer emulsions post-reacted with an epoxy silane which are usable in paint and plaster formulations. Further disclosed are such formulations containing fillers such as silica and pigments such as zinc oxide and zinc sulfide.

The present invention seeks to overcome the problems associated with the prior art acrylic caulking or sealant compositions which do not have good adhesion, such as wet adhesion to glass, ceramic tile, or aluminum or wet adhesion of a silane-free acrylic caulking or sealant composition.

According to a first aspect of the present invention there is provided an acrylic composition, particularly useful as a sealing or caulking composition with improved adhesion, said composition comprising an acrylic emulsion copolymer binder with a glass transition temperature from about 0 °C. to about -60 °C., zinc oxide and solid silica, wherein the zinc oxide is in an amount from about 0.5% to about 5%, by dry weight based on dry copolymer binder weight, and the solid silica is in an amount of from about 0.5% to about 10%, by dry weight based on dry copolymer binder weight.

According to a second aspect of the present invention there is provided a method of forming an acrylic composition, particularly useful as a sealing or caulking composition with improved adhesion, said composition comprising an acrylic emulsion copolymer binder with a glass transition temperature from about 0 °C. to about -60 °C., wherein the copolymer binder is mixed with zinc oxide in an amount from about 0.5% to about 5%, by dry weight based on dry copolymer binder weight, and solid silica in an amount of from about 0.5% to about 10%, by dry weight based on dry copolymer binder weight.

Preferably said acrylic emulsion copolymer binder has a glass transition temperature from about -20 °C. to about -50 °C.

Preferably said zinc oxide is admixed in an amount from about 1.0% to about 2.6%, by dry weight based on dry copolymer binder weight. Preferably said silica is admixed in an amount from about 1.0% to about 5.5%, by dry weight based on dry copolymer binder weight.

The advantages of the present invention are that it provides a method of forming an acrylic caulking or sealant composition with improved adhesion, it provides a method of improving the wet adhesion of an acrylic caulking or sealant composition to glass, ceramic tile, or aluminum, and that it provides a method for improving the wet adhesion of a silane-free acrylic caulking or sealant composition.

The present invention therefore relates to a method for forming an acrylic caulking or sealing composition with improved adhesion, the silane-free composition containing an acrylic emulsion copolymer binder with a glass transition temperature from about 0 °C. to about -60 °C., wherein the improvement includes admixing with the binder zinc oxide in an amount of from about 0.5% to about 5%, by dry weight based on dry copolymer binder weight, and solid silica in an amount of from about 0.5% to about 10%, by dry weight based on dry copolymer binder weight.

None of the afore-mentioned prior art references discloses a method for improving the adhesion of an aqueous acrylic caulking or sealant composition by forming the composition incorporating an acrylic emulsion copolymer binder with a glass transition temperature from about 0 °C. to about -60 °C., solid zinc oxide in an amount of from about 0.5% to about 5%, by dry weight based on dry copolymer binder weight, and solid silica in an amount of from about 0.5% to about 10%, by dry weight based on dry copolymer binder weight; and applying said composition to a substrate.

This invention is directed to a method for forming an acrylic caulking or sealing composition with improved adhesion, the silane-free composition containing an acrylic emulsion copolymer binder with a glass transition temperature from about 0 °C. to about -60 °C., wherein the improvement includes admixing with the binder zinc oxide in an amount of from about 0.5% to about 5%, by dry weight based on dry copolymer binder weight, and solid silica in an amount of from about 0.5% to about 10%, by dry weight based on dry copolymer binder weight.

The acrylic emulsion copolymer binder is an aqueous emulsion polymer prepared by the addition polymerization of at least one ethylenically unsaturated monomer, wherein the binder composition contains greater than about 50% by weight of acrylic monomers. Acrylic monomers are defined herein as including (meth)acrylic acid, esters of (meth)acrylic acid, amides of (meth)acrylic acid, nitriles of (meth)acrylic acid, and the like. As an ethylenically unsaturated monomer, acrylic ester monomers including methyl acrylate, ethyl acrylate, butyl acrylate, 2-ethylhexyl acrylate, decyl acrylate, methyl methacrylate, butyl methacrylate, isodecyl methacrylate, hydroxyethyl acrylate, hydroxyethyl methacrylate, and hydroxypropyl methacrylate; acrylamide or substituted acrylamides; styrene or substituted styrenes; butadiene; vinyl acetate or other vinyl esters; acrylonitrile or methacrylonitrile; and the like, may be used, subject to the glass transition temperature (Tg) restrictions stated herein. Predominant amounts of butyl acrylate are preferred. Silicon-containing monomers such as, for example, vinyl trialkoxysilanes including vinyl trimethoxysilane, allyl trialkoxysilanes including allyl trimethoxysilane, (meth)acryloxyalkyl trialkoxysilanes including methacryloxypropyl trimethoxysilane, (meth)acryloxyalkyl alkyldialkoxysilanes including methacryloxypropyl methyldiethoxysilane, (meth)acryloxyalkoxyalkyl trialkoxy silanes including methacryloxyethoxyethyl trimethoxysilane, and mercaptoalkyl trialkoxysilanes including mercaptopropyl trimethoxysilane may also be incorporated at a level of from about 0.01% to about 6 %, by weight based on the weight of the acrylic emulsion copolymer. Low levels of ethylenically-unsaturated monocarboxylic acids such as, for example, from 0 to about 7 %, by weight, based on the weight of the acrylic emulsion copolymer, methacrylic acid or acrylic acid may be used.

When low levels of precrosslinking or gel content are desired, low levels of multi-ethylenically unsaturated monomers such as, for example, allyl methacrylate, diallyl phthalate, 1,4-butylene glycol dimethacrylate, 1,6-hexanedioldiacrylate, and the like, may be used at a level of from about 0.01% to about 5 %, by weight based on the weight of the acrylic emulsion copolymer.

The glass transition temperature (Tg) of the acrylic emulsion copolymer must be in a range suitable for the use of the copolymer in a caulking or sealing composition. Glass transition temperatures, as calculated by the Fox equation [TG Fox, Bull. Am Physics Soc., Vol. 1, Issue 3, page 123 (1956)], from about 0 °C. to about -60 °C. are required. Glass transition temperatures from about -20 °C. to about -50 °C. are preferred.

The particles of the acrylic emulsion copolymer are from about 80 to about 400 nanometers in diameter, as measured using a Brookhaven BI-90 Particle Sizer, which employs a light scattering technique.

However, polymodal particle size distributions such as those disclosed in US-A-4,384,056 and US-A-4,539,361 may be employed.

The acrylic emulsion copolymer may contain copolymer particles made up of two or more mutually incompatible copolymers. These mutually incompatible copolymers may be present in various morphological configurations such as, for example, core/shell particles, core/shell particles with shell phases incompletely encapsulating the core, core/shell particles with a multiplicity of cores, interpenetrating network particles, and the like.

The acrylic emulsion copolymer may be prepared by techniques for polymerizing ethylenically-unsaturated monomers which are well known in the art. Anionic or nonionic surfactants, or mixtures thereof, may be used. Nonionic surfactants are preferred. The polymerization may be carried out by various means such as, for example, with all of the monomer in the reaction kettle at the beginning of the polymerization reaction, with a portion of the monomer in emulsified form present in the reaction kettle at the beginning of the polymerization reaction, and with a small particle size emulsion polymer seed present in the reaction kettle at the beginning of the polymerization reaction. Small emulsion polymer seed herein is defined as a preformed emulsion polymer with a particle diameter of less than about 80 nanometers. The use of a small particle size emulsion polymer seed present in the reaction kettle at the beginning of the polymerization reaction is preferred. The polymerization reaction may be initiated by various methods known in the art such as, for example, by using the thermal decomposition of an initiator and by using an oxidation-reduction reaction ("redox reaction") to generate free radicals to effect the polymerization.

Chain transfer agents including mercaptans, polymercaptans, and halogen compounds are sometimes used in the polymerization mixture in order to moderate the molecular weight of the acrylic emulsion copolymer. Generally, from 0% to about 1% by weight, based on the weight of the polymeric binder, of C₄- C₂₀ alkyl mercaptans, mercaptopropionic acid, or esters of mercaptopropionic acid, may be used.

The acrylic caulking or sealing composition with improved adhesion containing an acrylic emulsion copolymer binder further contains zinc oxide in an amount of from about 0.5% to about 5%, by dry weight based on dry copolymer binder weight. Preferred is zinc oxide in an amount of from about 1.0 % to about 2.6 %, by dry weight based on dry copolymer binder weight. Zinc oxide may be incorporated in the form of solid zinc oxide or in the form of zinc complexes with amines, and the like, such as, for example, zinc ammonium carboxylate complexes. Zinc oxide in its complex form as prepared by dissolving solid zinc oxide with aqueous ammonia and ammonium bicarbonate is preferred.

The acrylic caulking or sealing composition with improved adhesion containing an acrylic emulsion copolymer binder further contains solid silica in an amount of from about 0.5% to about 10%, by dry weight based on dry copolymer binder weight. Preferred is solid silica in an amount of from about 1.0% to about 5.5%, by dry weight based on dry copolymer binder weight. Solid silica may be incorporated in the form of solid fumed silica or in the form of colloidal silica.

The adhesion of caulks or sealants may be improved by incorporating low molecular weight silane, silane-type, or silane-precursor adhesion-promotor additives. Such additives, which typically have a molecular weight below about 1000, are expensive, may be unstable in terms of their efficacy, and may lead to instability in the caulking or sealing composition. The acrylic caulking or sealing composition of this invention is "silane-free", by which is meant herein that no silane, silane-type, or silane-precursor additives are incorporated therein.

In addition to the acrylic emulsion copolymer, zinc oxide, and solid silica, conventional caulk and sealant components such as, for example, pigments, extenders, dispersants, surfactants, coalescents, wetting agents, thickeners, rheology modifiers, drying retarders, plasticizers, biocides, defoamers, colorants, waxes, and the like, may be used in the caulking or sealant compositions of this invention.

The caulks and sealants of this invention may be prepared by mixing the acrylic emulsion copolymer, zinc oxide, and solid silica with conventional components in any dispersion equipment capable of handling high viscosity or high consistency materials such as, for example, a Sigma mill.

The caulks and sealants of this invention may be applied to a wide variety of architectural construction materials such as, for example, wood, cement or concrete, aluminum or other metals, glass, ceramics, glazed or unglazed tiles, polyvinyl chloride and other plastics, plaster, stucco, and roofing substrates such as asphaltic coatings, roofing felts, synthetic polymer membranes, and foamed polyurethane insulation; or to previously painted, primed, undercoated, worn, or weathered substrates.

The caulks and sealants of this invention may be applied by techniques well known in the art such as by caulking guns, trowels, and the like.

The present invention will now be descibed only by way of examples.

### EXAMPLE 1. Preparation of acrylic emulsion copolymer binder

### Preparation of Sample 1.

To a 5 liter, 4-necked flask equipped with a mechanical stirrer, a thermometer, a reflux condenser, and a heating mantle was added 700. g. deionized water, 3.25 g. sodium dodecyl benzene sulfonate, and 0.75 g. sodium carbonate. A nitrogen blanket was initiated and the contents were heated to 85 °C. A monomer pre-emulsion was prepared from 325.0 g. deionized water, 12.5 g. sodium dodecyl benzene sulfonate, 1445.3 g. butyl acrylate, 52.5 g. acrylic acid, and 2.25 g. 3-(trimethoxysilyl)propyl methacrylate. A solution of 4.5 g. ammonium persulfate in 60.0 g. deionized water was added to the flask. A solution of 1.5 g. ammonium persulfate in 120 g. deionized water was added to the reactor uniformly along with the monomer emulsion over 160 minutes, while maintaining the temperature at 85 °C. After the monomer addition was completed, the reaction mixture was held at 85 °C. for an additional 30 minutes and then cooled. At 65 C, 0.011 g. ferrous sulfate in 7.5 g. deionized water, 1.1 g. t-butyl hydroperoxide in 15 g. deionized water, and 1.25 g. sodium formaldehyde sulfoxylate in 15 g. deionized water were added to the reaction mixture. After sixty minutes, 1.1 g. t-butyl hydroperoxide in 15 g. deionized water and 1.25 g. sodium formaldehyde sulfoxylate were added to the reaction mixture at 57 °C. The pH of the cooled latex was adjusted to 5.4 with 8.0 g. ammonia (28%) diluted with 12.0 g. deionized water. The solids content of the final latex was 52% and the particle size was 150 nanometers, as determined using a Brookhaven BI-90 particle sizer.

### EXAMPLE 2. Preparation of acrylic emulsion copolymer binder

### Preparation of Sample 2.

To a 5 liter, 4-necked flask equipped with a mechanical stirrer, a thermometer, a reflux condenser, and a heating mantle was added 700. g. deionized water. A nitrogen blanket was initiated and the water was heated to 83 °C. A monomer pre-emulsion was prepared from 300.0 g. deionized water, 17.1 g. sodium dodecyl benzene sulfonate, 1520. g. butyl acrylate, and 55.1 g. acrylic acid. A solution of 4.7 g. ammonium persulfate in 30.0 g. deionized water was added to the flask. A 24.6 g. portion of a poly(methyl methacrylate/butyl acrylate/methacrylic acid) latex with a particle diameter of 100 nanometers was added. The monomer pre-emulsion was added to the reactor uniformly over 180 minutes, while maintaining the temperature at 83 °C. After 45% of the monomer pre-emulsion had been added, a solution of 1.58 g. ammonium persulfate in 90 g. deionized water was started and continued concurrently with the balance of the monomer pre-emulsion. After the monomer addition was completed, the reaction mixture was held at 83 °C. for an additional 30 minutes. and then cooled. At 80 °C., 2.1 g. ammonia (28%) diluted with 6 g. deionized water was added to the reaction mixture which was then cooled. At 65 C, 0.008 g. ferrous sulfate in 5 g. deionized water, 1.1 g. t-butyl hydroperoxide in 5 g. deionized water, and 0.75 g. sodium formaldehyde sulfoxylate in 10 g. deionized water were added to the reaction mixture. After fifty-five minutes, 1.1 g. t-butyl hydroperoxide in 5 g. deionized water and 0.75 g. sodium formaldehyde sulfoxylate in 10 g. deionized water were added to the reaction mixture at 50 °C. The pH of the cooled latex was adjusted to 5.3 with 8.0 g. ammonia (28%) diluted with 12.0 g. deionized water. The solids content of the final latex was 55% and the particle size was 390 nanometers, as determined using a Brookhaven BI-90 particle sizer.

### EXAMPLE 3. Preparation of acrylic emulsion copolymer binder

### Preparation of Sample 3.

To a 5 liter, 4-necked flask equipped with a mechanical stirrer, a thermometer, a reflux condenser, and a heating mantle was added 1200. g. deionized water, 65.0 g. sodium dodecyl benzene sulfonate, and 0.75 g. sodium carbonate. A nitrogen blanket was initiated and the water was heated to 85 °C. A monomer pre-emulsion was prepared from 725.0 g. deionized water, 65.0 g. sodium dodecyl benzene sulfonate, 1447.5 g. butyl acrylate, and 52.5 g. acrylic acid. A solution of 4.5 g. ammonium persulfate in 60.0 g. deionized water was added to the flask. The monomer pre-emulsion and a solution of 1.5 g. ammonium persulfate dissolved in 120. g. deionized water were added to the reactor uniformly over 210 minutes, while maintaining the temperature at 85 °C. After the monomer addition was completed, the reaction mixture was held at 85 °C. for an additional 30 minutes and then cooled. At 65 C, 0.011 g. ferrous sulfate in 7.5 g. deionized water, 1.1 g. t-butyl hydroperoxide in 15 g. deionized water, and 1.25 g. sodium formaldehyde sulfoxylate in 15 g. deionized water were added to the reaction mixture. After thirty minutes, 1.1 g. t-butyl hydroperoxide in 15 g. deionized water and 1.25 g. sodium formaldehyde sulfoxylate in 15 g. deionized water were added to the reaction mixture at 54 °C. The pH of the cooled latex was adjusted to 4.5 with 4.0 g. ammonia (28%) diluted with 8.0 g. deionized water. The solids content of the final latex was 40%, by weight, and the particle size was 64 nanometers, as determined using a Brookhaven BI-90 particle sizer.

### EXAMPLE 4. Preparation of acrylic caulking composition.

To a one quart capacity Sigma mixer were added the formulation ingredients listed in Table 4.1, in the order listed. Mixing continued for 45 minutes, followed by application of house vacuum for 10 minutes in order to achieve deaeration of the caulk.

**Table 4.1**

| Ingredients for acrylic caulking composition (all quantities in grams) | | | | |
|---|---|---|---|---|
| Ingredient | Sample 4 | Comp. A | Comp. B | Comp. C |
| Sample 1 | 718 | 718 | 718 | 718 |
| Nonionic surfactant | | | | |
| (TRITON X-405) | 3.2 | 3.2 | 3.2 | 3.2 |
| Ethylene glycol | 2.0 | 2.0 | 2.0 | 2.0 |
| Titanium Dioxide(76% slurry) | | | | |
| (TIPURE R942) | 48.2 | 48.2 | 48.2 | 48.2 |
| Anionic thickener | | | | |
| (ACRYSOL TT615) | 12 | 12 | 18 | 18 |
| Solid fumed silica | | | | |
| (Cab-O-Sil M5) | 16 | 16 | 0 | 0 |
| Zinc oxide premix¹ | 65 | 0 | 65 | 0 |
| Ammonia (28%) | 0 | 30 | 0 | 30 |
| Deionized water | 0 | 18 | 0 | 18 |
| Defoamer | | | | |
| (Nopco NXZ) | 3.2 | 3.2 | 3.2 | 3.2 |

| | | | | |
|---|---|---|---|---|
| ¹ Zinc oxide premix was made by admixing 311 g. ammonium bicarbonate, 322 g. zinc oxide (KADOX 515), 1210 g. ammonium hydroxide (28%), and 716 g. deionized water. | | | | |

All four acrylic caulking compositions were easy to gun out of a caulk cartridge yet viscous enough to resist slumping.

### EXAMPLE 5. Evaluation of acrylic caulking composition for wet and dry adhesion.

The substrate was cleaned and then caulk layup proceeded according to the teaching of ASTM C794, as described herein-below.

Glass, anodized Aluminum, and the glazed side of ceramic tile were cleaned with methyl ethyl ketone followed by a deionized water rinse; the substrates were air-dried in a hood. The back side of ceramic tile was wiped free of dust and loose material with a dry plastic scouring pad. Poly vinyl chloride (PVC) was cleaned with soap and water, followed by a deionized water rinse; the substrate was then air-dried in the hood. Portland cement block was scrubbed under running water with a plastic scouring pad followed by a deionized water rinse and then air-dried in the hood.

After cleaning, layup proceeded as follows: a 2.54 cm (1-inch) wide piece of Teflon tape was placed across the bottom of the test surface perpendicular to the test direction.

The caulking composition was gunned out of a caulk cartridge onto a test surface to approximately 0.32cm (1/8) inch thickness. Two 2.54 cm (1-inch) wide cloth strips were placed on top of the caulk perpendicular to the Teflon tape. Polyester film (MYLAR) was placed on top of this and a steel roller was used to roll the caulk to a 0.16 cm (1/16 inch) thickness using 0.16 cm (1/16 inch) Aluminum spacer panels on top of the substrate panel to either side of the test specimen as guides for the roller. A thin layer of caulk was then smeared on top of cloth strips to effectively embed the cloth into the caulk. The samples were dried/cured for two weeks at 23 °C. and 50% relative humidity.

Dry peel adhesion was determined by exposing the 2.54 cm (1-inch) test strips by cutting lengthwise along their sides and stripping away excess dried/cured caulk. After releasing the caulk from the Teflon tape undercoating, a 2.54 cm (1-inch) long undercut was made for each test strip. The substrate was mounted in Applied Test Systems Series 1102 universal testing machine with the cloth peeled back at a 180 degree angle at a rate of separation of 5.1 cm/min (2 inches/minute). For each strip, the test was run for 1.5 minutes (7.62 cm (3 inches)) while recording the force on the strip chart recorder. High and low values were recorded, as was the failure mode (A=adhesive failure; C=cohesive failure; CP= cohesive peak failure; LC=light cohesive failure; SS=stick slip failure; and FD=fabric delamination failure).

Wet peel adhesion was determined on test specimens prepared exactly as the samples used for dry adhesion testing, using the same batch of caulk. After drying/curing the samples were immersed in deionized water for 7 days, dabbed dry, and tested as described herein-above for dry peel adhesion.

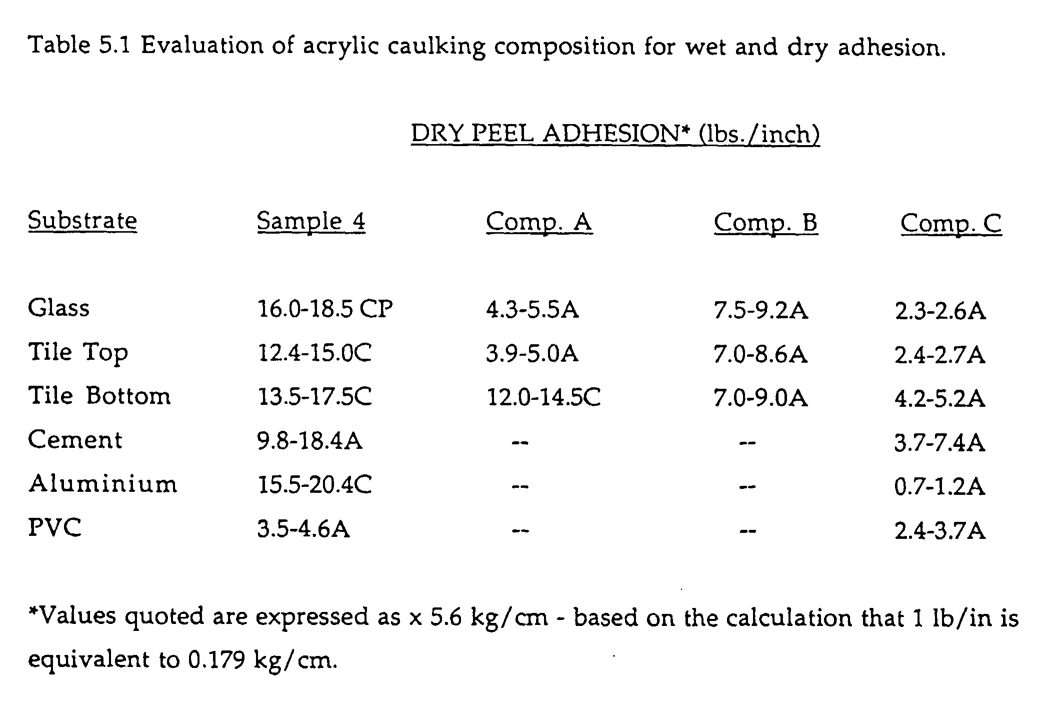

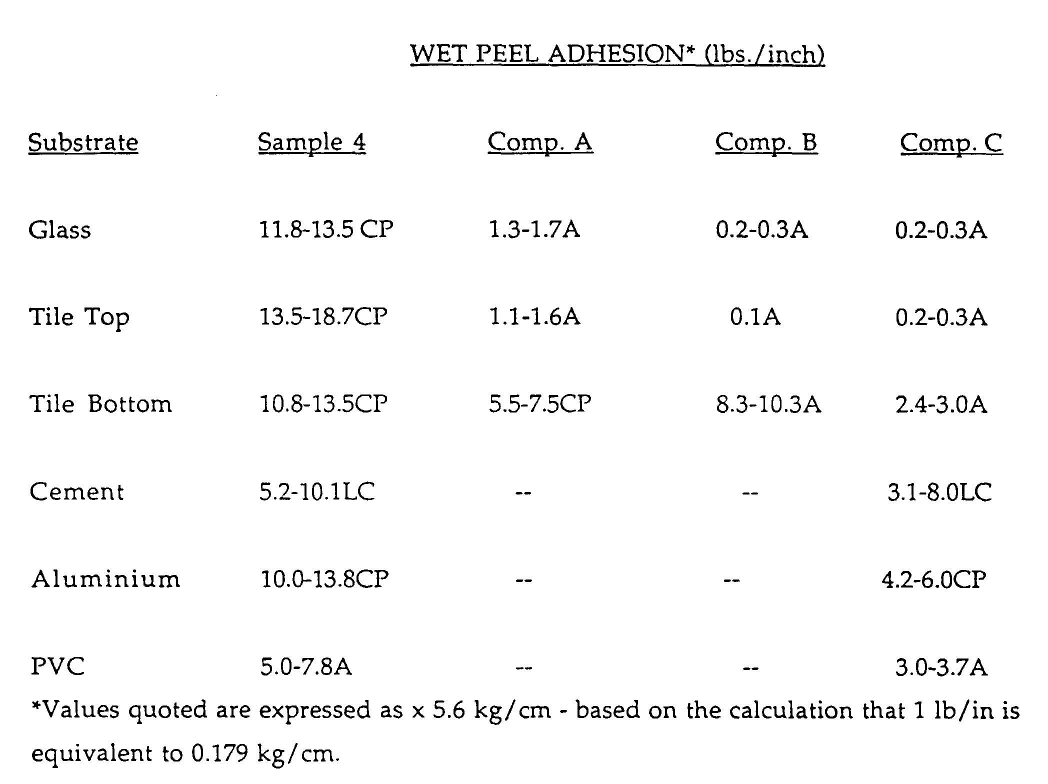

Sample 4 of this invention exhbits unexpectedly improved wet and dry adhesion to a number of architectural construction materials relative to Comparative A (no zinc oxide), Comparative B (no silica), and Comparative C (no zinc oxide or silica).

### EXAMPLE 6. Preparation and evaluation of acrylic caulking composition incorporating styrene/acrylic copolymer binder

To a one quart capacity Sigma mixer were added the formulation ingredients listed in Table 6.1, in the order listed. Mixing continued for 45 minutes, followed by application of house vacuum for 10 minutes to achieve deaeration of the caulk.

**Table 6.1**

| Ingredients for acrylic caulking composition (all quantities in grams) | |
|---|---|
| Ingredient | Sample 5 |
| Styrene/acrylic binder¹ | 799 |
| Nonionic surfactant | |
| (TRITON X-405) | 6.4 |
| Biocide | 1.0 |
| (SKANE M-8) | |
| Ethylene glycol | 2.0 |
| Titanium Dioxide(76% slurry) | |
| (TIPURE R942) | 48.2 |
| Anionic thickener | |
| (ACRYSOL TT615) | 10 |
| Solid fumed silica | |
| (LUDOX HS40) | 37.5 |
| Zinc oxide premix² | 36.4 |
| Defoamer | |
| (Nopco NXZ) | 3.2 |

| | |
|---|---|
| ¹ Styrene/acrylic binder containing 96% acrylic monomer and 4% styrene | |
| ² Zinc oxide premix was made by admixing 311 g. ammonium bicarbonate, 322 g. zinc oxide (KADOX 515), 1210 g. ammonium hydroxide (28%), and 716 g. deionized water. | |

Evaluation of wet adhesion was carried out as described in Example 5.

**Table 6.2**

| Evaluation of acrylic caulking composition for wet adhesion. | |
|---|---|
| WET PEEL ADHESION* (lbs./inch) | |
| Substrate | Sample 5 |
| Glass | 3.5-8.9 A |
| Aluminium | 2.2-3.2 A |
| Pine | 0.5-0.8 A |

| | |
|---|---|
| *Values quoted are expressed as x 5.6 kg/cm - based on the calculation that 1 lb/in is equivalent to 0.179 kg/cm. | |

Sample 5 of this invention exhibits good wet adhesion to glass and aluminum and fair wet adhesion to pine.

### EXAMPLE 7. Preparation and evaluation of acrylic caulking compositions incorporating various levels of silica

To a one quart capacity Sigma mixer were added the formulation ingredients listed in Table 7.1, in the order listed. Mixing continued for 45 minutes, followed by application of house vacuum for 10 minutes to achieve deaeration of the caulk.

**Table 7.1**

| Ingredients for acrylic caulking composition (all quantities in grams) | | | | | | |
|---|---|---|---|---|---|---|
| Ingredient | Sample | 6 | 7 | 8 | 9 | 10 |
| All-acrylic binder | | 712 | 712 | 717 | 712 | 700 |
| Ammonia (28%) | | - | - | - | - | 14 |
| Ethylene glycol | | 2.3 | 2.3 | 2.3 | 2.3 | 2.3 |
| Mineral Oil | | - | - | - | - | 40 |
| Titanium Dioxide(76% slurry) | | | | | | |
| (TIPURE R942) | | 45 | 45 | 45 | 45 | 45 |
| Anionic thickener | | | | | | |
| (ACRYSOL TT615) | | 12 | 11 | 12 | 10 | - |
| Solid fumed silica | | | | | | |
| (CAB-O-SIL M5) | | 1.0 | 2.1 | - | 4.2 | 26 |
| Colloidal Silica (14.5% active) | | | | | | |
| (Nalco 2326) | | - | - | 14.5 | - | - |
| Zinc oxide premix¹ | | 57 | 57 | 57 | 57 | 57 |
| Defoamer | | | | | | |
| (Nopco NXZ) | | 3 | 3 | 3 | 3 | 3 |

| | | | | | | |
|---|---|---|---|---|---|---|
| ¹ Zinc oxide premix was made by admixing 311 g. ammonium bicarbonate, 322 g. zinc oxide (KADOX 515), 1210 g. ammonium hydroxide (28%), and 716 g. deionized water. | | | | | | |

Evaluation of wet adhesion was carried out as described in Example 5.

**Table 7.2**

| Evaluation of acrylic caulking composition for wet adhesion. | | | | | | |
|---|---|---|---|---|---|---|
| WET PEEL ADHESION* (lbs./inch) | | | | | | |
| Substrate | Sample | 6 | 7 | 8 | 9 | 10 |
| Glass | | 0.4-0.6 A | 0.4-0.7A | 1.1-2.1A | 1.5-6.5A | 1.9-2.4A |
| Aluminium | | - | - | 6.8-9.3CP | - | 3.2-3.8A |

| | | | | | | |
|---|---|---|---|---|---|---|
| *Values quoted are expressed as x 5.6 kg/cm - based on the calculation that 1 lb/in is equivalent to 0.179 kg/cm. | | | | | | |

Samples 8, 9, and 10 of this invention exhibit good wet adhesion to glass and, in the cases measured, to aluminum.

### EXAMPLE 8. Preparation and evaluation of acrylic caulking compositions incorporating various levels of silica

To a one quart capacity Sigma mixer were added the formulation ingredients listed in Table 8.1, in the order listed. Mixing continued for 45 minutes, followed by application of house vacuum for 10 minutes to achieve deaeration of the caulk.

**Table 8.1**

| Ingredients for acrylic caulking composition (all quantities in grams) | | | |
|---|---|---|---|
| Ingredient | Sample | 11 | 12 |
| All-acrylic binder | | 665 | 665 |
| Nonionic Surfactant | | | |
| (TRITON X-405) | | 2.1 | 2.1 |
| Zinc Oxide | | 9.0 | 11.0 |
| Titanium Dioxide(76% slurry) | | | |
| (TIPURE R942) | | 45 | 45 |
| Ethylene glycol | | 2.3 | 2.3 |
| Anionic thickener | | | |
| (ACRYSOL TT615) | | 8 | 8 |
| Solid fumed silica | | | |
| (LUDOX HS40) | | 35 | 35 |
| AMMONIA (28%) | | 3 | 3 |
| Defoamer | | | |
| (Nopco NXZ) | | 3 | 3 |

Evaluation of wet adhesion was carried out as described in Example 5.

**Table 8.2**

| Evaluation of acrylic caulking composition for wet adhesion. | | | |
|---|---|---|---|
| WET PEEL ADHESION* (lbs./inch) | | | |
| Substrate | Sample | 11 | 12 |
| Glass | | 2.8-5.6A | 1.3-3.7A |
| Aluminium | | 2.6-6.0A | 3.0-4.4A |

| | | | |
|---|---|---|---|
| *Values quoted are expressed as x 5.6 kg/cm - based on the calculation that 1 lb/in is equivalent to 0.179 kg/cm. | | | |

Samples 11 and 12 of this invention exhibit good wet adhesion to glass and, in the cases measured, to aluminum.

The following marks are trade marks: TRITON, TIPURE, ACRYSOL, CAB-O-SIL, NOPCO, SKANE and LUDOX.

## Claims

1. A method of forming a composition, particularly suitable for use as an acrylic caulking or sealing composition with improved adhesion, said composition comprising an acrylic emulsion copolymer binder with a glass transition temperature from 0 °C. to -60 °C., wherein the copolymer binder is mixed with zinc oxide in an amount from 0.5% to 5%, by dry weight based on dry copolymer binder weight, and solid silica in an amount of from 0.5% to 10%, by dry weight based on dry copolymer binder weight.

2. The method of claim 1 wherein said acrylic emulsion copolymer binder has a glass transition temperature from -20 °C to -50 °C.

3. The method of claim 1 or claim 2 wherein said zinc oxide is admixed in an amount from 1.0% to 2.6%, by dry weight based on dry copolymer binder weight.

4. The method of any one of claims 1 to 3 wherein said silica is admixed in an amount from 1.0% to 5.5%, by dry weight based on dry copolymer binder weight.

5. A composition, particularly suitable for use as an acrylic caulking or sealing composition with improved adhesion, said composition comprising an acrylic emulsion copolymer binder with a glass transition temperature from 0 °C. to -60 °C, zinc oxide and solid silica, wherein the zinc oxide is in an amount from 0.5% to 5%, by dry weight based on dry copolymer binder weight, and the solid silica is in an amount of from 0.5% to 10%, by dry weight based on dry copolymer binder weight.

6. A composition according to claim 5 wherein the composition is a composition as defined in any one of claims 2 to 4.

## Patentansprüche

1. Verfahren zum Formen einer Masse, die insbesondere zur Verwendung als eine acrylische Dichtung oder Dichtungsmasse mit verbesserter Adhäsion geeignet ist, wobei die Masse ein acrylisches Emulsions-Copolymer-Bindemittel mit einer Glasübergangstemperatur von 0°C bis -60°C umfaßt, wobei das Copolymerbindemittel mit Zinkoxid in einer Menge von 0,5 bis 5% Trockengewicht, basierend auf dem Gewicht des trockenen Copolymerbindemittels, und festem Siliziumdioxid in einer Menge von 0,5 bis 10% Trockengewicht, basierend auf dem Trockengewicht des Copolymerbindemittels, gemischt wird.

2. Verfahren gemäß Anspruch 1, bei dem das acrylische Emulsions-Copollymer-Bindemittel eine Glasübergangstemperatur von -20°C bis -50°C hat.

3. Verfahren gemäß Anspruch 1 oder Anspruch 2, bei dem das Zinkoxid in einer Menge von 1,0% bis 2,6% Trockengewicht, basierend auf dem Gewicht des trockenen Copolymerbindemittels, zugemischt wird.

4. Verfahren gemäß irgendeinem der Ansprüche 1 bis 3, bei.dem das Siliziumdioxid in einer Menge von 1,0 bis 5,5% Trockengewicht, basierend auf dem Gewicht des trockenen Copolymerbindemittels, zugemischt wird.

5. Masse, die insbesondere zur Verwendung als eine acrylische Dichtung oder Dichtungsmasse mit verbesserter Adhäsion geeignet ist, wobei die Masse ein acrylisches Emulsionscopolymerbindemittel mit einer Glasübergangstemperatur von 0°C bis -60°C, Zinkoxid und festes Siliziumdioxid umfaßt, wobei das Zinkoxid in einer Menge von 0,5 bis 5% Trockengewicht, basierend auf dem Gewicht des trockenen Copolymerbindemittels, und das feste Siliziumdioxid in einer Menge von 0,5 bis 10% Trockengewicht, basierend auf dem Gewicht des trockenen Copolymerbindemittels vorhanden ist.

6. Masse gemäß Anspruch 5, wobei die Masse eine Masse gemäß irgendeinem der Ansprüche 2 bis 4 ist.

## Revendications

1. Procédé de formation d'une composition, convenant en particulier comme composition acrylique de calfatage ou de scellage présentant une meilleure adhérence, ladite composition comprenant un liant copolymère acrylique en émulsion ayant une température de transition vitreuse de 0°C à -60°C, procédé dans lequel le liant copolymère est mélangé à de l'oxyde de zinc en quantité de 0,5 % à 5 %, en poids à sec sur base du poids à sec du liant copolymère, et de la silice solide en quantité de 0,5 % à 10 %, en poids à sec sur base du poids à sec du liant copolymère.

2. Procédé selon la revendication 1, dans lequel ledit liant copolymère acrylique en émulsion a une température de transition vitreuse de -20°C à -50°C.

3. Procédé selon la revendication 1 ou 2, dans lequel ledit oxyde de zinc est mélangé en quantité de 1,0 % à 2,6 % en poids à sec sur base du poids à sec du liant copolymère.

4. Procédé selon l'une quelconque des revendications 1 à 3, dans lequel ladite silice est mélangée en quantité de 1,0 % à 5,5 % en poids à sec sur base du poids à sec du liant copolymère.

5. Composition, convenant en particulier comme composition acrylique de scellage ou de calfatage présentant une meilleure adhérence, ladite composition comprenant un liant copolymère acrylique en émulsion ayant une température de transition vitreuse de 0°C à -60°C, de l'oxyde de zinc et de la silice solide, composition dans laquelle l'oxyde de zinc est présent en quantité de 0,5 % à 5 % en poids à sec sur base du poids à sec du liant copolymère et la silice solide est présente en quantité de 0,5 % à 10 % en poids à sec sur base du poids à sec du liant copolymère.

6. Composition selon la revendication 5, dans laquelle la composition est une composition telle que définie dans l'une quelconque des revendications 2 à 4.
